**Europäisches Patentamt**

**European Patent Office**

**Office européen des brevets**

(11) Veröffentlichungsnummer: **0 157 223**
**A1**

# EUROPÄISCHE PATENTANMELDUNG

(21) Anmeldenummer: **85102667.4**

(22) Anmeldetag: **08.03.85**

(51) Int. Cl.⁴: **A 47 J 41/02**

(30) Priorität: **20.03.84 DE 3410207**

(43) Veröffentlichungstag der Anmeldung: **09.10.85**
**Patentblatt 85/41**

(84) Benannte Vertragsstaaten: **AT BE CH DE FR GB IT LI LU NL SE**

(71) Anmelder: **Rotpunkt Dr. Anso Zimmermann, Industriestrasse, D-6434 Niederaula / Bad Hersfeld (DE)**

(72) Erfinder: **Zimmermann, Anso, Dr., Seilerweg 34, D-6430 Bad Hersfeld (DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22 (DE)**

(54) **Gefäss zur vorübergehenden Aufbewahrung bzw. zur Einnahme von Speisen oder Getränken.**

(57) Die Erfindung bezieht sich auf ein Gefäß zur vorübergehenden Aufbewahrung bzw. zur Einnahme von Speisen oder Getränken, insbesondere Isolierspeisegefäße oder Isolierkanne bzw. -flasche, mit einem Gehäuse, dessen Füllöffnung durch einen Deckel verschließbar ist, wobei das Gehäuse einen besonderen verschließbaren Hohlraum zur Aufnahme von Gegenständen bildet und das Gefäß einen Griff aufweist und bezweckt das Gefäß derart auszugestalten, daß zur Ausbildung des Hohlraums die Form und das Volumen des Gefäßes nicht störend vergrößert und die Handhabungsfreundlichkeit des Gefäßes nicht beeinträchtigt wird. Dies wird dadurch erreicht, daß der Griff (4) hohl ausgebildet ist und der Hohlraum (24, 28) im Griff (4) angeordnet ist.

## Gefäß zur vorübergehenden Aufbewahrung bzw. zur Einnahme von Speisen oder Getränken

Die Erfindung bezieht sich auf ein Gefäß nach dem Oberbegriff des Anspruchs 1.

Ein Gefäß dieser Gattung ist in DE-OS 28 35 o7o beschrieben und dargestellt. Bei der bekannten Bauart ist der Hohlraum am Gehäuse ausgebildet, was zu einer erheblichen Formveränderung und Volumenvergrößerung führt. Bei der bekannten Bauart ist der Hohlraum verhältnismäßig groß ausgebildet, weil er der Aufnahme von Trinkbechern dient, jedoch führt die bekannte Bauart auch dann zu einer störenden Formveränderung und Volumenvergrößerung, wenn der Hohlraum zur Aufnahme kleinerer Gegenstände, zum Beispiel persönlicher Utensilien, ausgebildet wäre.

Eine solche Formveränderung bzw. Volumenvergrößerung ist beim vorliegenden Gegenstand deshalb unerwünscht, weil er bei seiner zweckentsprechenden Nutzung für Camping, Sport und Reise in Taschen oder dergleichen Behältnisse zu verpacken ist, was durch die Formveränderung bzw. Volumenvergrößerung erschwert wird. Darüberhinaus ist bei der bekannten Bauart die Handhabung des Gefäßes erschwert.

Der Erfindung liegt die Aufgabe zugrunde, ein Gefäß der vorliegenden Gattung so auszugestalten, daß durch die Ausbildung eines verschließbaren Hohlraumes die Form und das Volumen des Gefäßes nicht störend vergrößert und die Handhabungsfreundlichkeit nicht beeinträchtigt wird.

Diese Aufgabe wird durch eine Ausgestaltung nach dem Anspruch 1 gelöst.

Der Erfindung liegt die Erkenntnis zugrunde, daß ein Griff, insbesondere dann habdhabungsfreundlich ist, wenn sein Querschnitt bzw. seine Form an die Größe einer Bedienungshand angepaßt ist. Ein handhabungsfreundlicher Griff weist deshalb ein beträchtliches Volumen auf. Erfindungsgemäß ist der Griff hohl ausgebildet und der Hohlraum zur Aufnahme von Gegenständen im Griff angeordnet. Der Vorteil der Erfindung besteht darin, daß der von einem Griff mit anzustrebenden Abmessungen eingenommene Raum dazu benutzt wird, den Hohlraum zu schaffen. Die erfindungsgemäße Ausgestaltung führt deshalb nicht zu einer störenden Formveränderung bzw. Volumenvergrößerung des Gehäuses bzw. des Gefäßes. Dabei wird die Handhabungsfreundlichkeit des Gefäßes verbessert bzw. erhalten. Die Verpackungsfreundlichkeit wird durch die erfindungsgemäße Ausgestaltung nicht beeinträchtigt.

Eine weitere Verbesserung der Handhabung des Gefäßes wird erreicht, wenn gemäß Anspruch 2 der Griff auf einer Seite des Gehäuses angeordnet ist. Je nachdem, ob es sich um eine Isolierkanne bzw. -flasche oder um ein Isolierspeisegefäß handelt, lassen sich hierdurch differenzierte Bedienungsvorteile erreichen. Dabei ist es im Hinblick auf eine solide und preisgünstige Ausführung empfehlenswert, den Griff einstückig am Gehäuse anzuformen.

Den zuletzt genannten Vorteilen dienen auch die Ausgestaltungsmerkmale nach Anspruch 3.

Um einen verhältnismäßig großen Hohlraum zu erhalten, empfiehlt es sich, den Griff nicht nur so groß auszubilden, wie es im Hinblick auf eine manuelle Handhabung erforderlich ist, sondern gemäß Anspruch 4 etwa über die gesamte Höhe des Gehäuses anzuordnen. Auch diese Ausgestaltung steht der vorliegenden Aufgabe nicht entgegen.

Dabei ist es von Vorteil, die Unterseite des Griffs eben und so auszubilden, daß sie in einer Ebene mit der Standfläche des Gefäßes liegt, Hierdurch wird die Standfestigkeit des Gefäßes erheblich vergrößert, was im Hinblick auf eine Benutzung in dem vorgenannten Benutzerkreis von Vorteil ist.

Es ist auch von Vorteil, den Griff und den darin sich erstreckenden Hohlraum geradlinig auszubilden, so daß der Hohlraum mit geradlinigen Gegenständen, zum Beispiel kleinen Schachteln, gut genutzt werden kann.

Die Ausgestaltung nach den Ansprüchen 7 und 8 führen nicht nur zu einem verhältnismäßig großen Hohlraum, weil der sonst bei Griffen übliche Zwischenraum zwischen Griff und Gehäuse in den Hohlraum einbezogen wird, sondern es wird gemäß Anspruch 8 auch eine Hinterschneidung des Griffs geschaffen, die die Handhabung des Gefäßes erheblich verbessert.

Um im Hohlraum zur Unterbringung von Gegenständen unterschiedlicher Art mehrere Abteilungen zur Verfügung zu haben, empfiehlt es sich gemäß Anspruch 9, die Abteilungen durch einen bevorzugt hohlen Einsatz zu schaffen, der in den Hohlraum einsetzbar ist. Ein hohler Einsatz hat gegenüber einer Trennwand den Vorteil, daß er in sich geschlossen und deshalb dicht ist, was im Hinblick auf besondere Aufbewahrungsgegenstände vorteilhaft sein kann.

Die Ausbildung nach Anspruch 1o führt zu einer Materialersparnis, weil ein Teil des Gehäusemantels durch die Wand des hohlen Einsatzes ersetzt wird.

Die Ausbildung nach Anspruch 11 führt nicht nur zu einer handlichen Grifform, sondern bei dieser Ausbildung ist der Hohlraum bzw. der Einsatz an einer zugänglichen Stelle vorgesehen, die ein einfache und bequeme Handhabung ermöglicht.

Zur Arretierung des Einsatzes am Gehäuse oder am Griff empfiehlt sich die Maßnahme nach Anspruch 12, bei der kein besonderes Halteglied vorzusehen ist, sondern die Arretierung durch das Verschlußglied erfolgt. Hierzu ist es gemäß Anspruch 13 vorteilhaft, den Einsatz unterseitig formschlüssig am Gehäuse oder am Griff festzulegen.

Es besteht eine vorteilhafte oberseitige Arretierung gem. den Ansprüchen 14 und 15 darin, daß das Verschlußglied den Einsatz oder einen Teil desselben und gleichzeitig einen gehäuseseitigen Halterungsansatz hinter- oder übergreift.

Die Maßnahme nach Anspruch 16 erleichtert die Montage des Einsatzes aufgrund des Vorhandenseins der Zentrierflächen, die mit gehäuseseitigen oder griffseitigen Zentrierflächen zusammenwirken.

Es gibt Benutzungsfälle, in denen es erwünscht ist, in den Hohlraum einsehen zu können. Dies wird durch die Ausgestaltung nach Anspruch 17 ermöglicht.

Im Hinblick auf den eingangs genannten Benutzerkreis kann es auch erforderlich sein, das Gefäß beispielsweise an einem Rucksack aufhängen zu müssen. Für solche Fälle weist das Gefäß gemäß Anspruch 18 wenigstens ein Loch im Gehäuse auf, durch das ein Riemen, ein Band oder dergleichen gezogen werden kann.

Es ist Zweck der Maßnahme nach Anspruch 19, dem Griff durch die Anordnung der Rippe mehr Festigkeit zu geben, so daß die Wandungen des Griffs schwächer ausgebildet werden können.

Die durch die Anordnung der Sicken vorgegebene Formgebung ermöglicht es, das oder die Löcher zum Durchziehen eines Riemens oder dergleichen in wenigstens einer Rippe vorzusehen.

Wenn der Griff gemäß Anspruch 7 durch eine U-förmige Wand gebildet ist, ergibt sich eine komplizierte Form für den Griff bzw. für das Gehäuse, so daß es gemäß den Ansprüchen 21 und 22 vorteilhaft ist, den vom Einsatz nicht abgedeckten Bereich des Hohlraums durch eine separate Deckplatte abzudecken, die zwecks leichter und schneller Montage bevorzugt so ausgebildet ist, daß sie zwischen den Wänden des U-förmigen Griffs eingerastet werden kann.

Ein Klappdeckel gemäß Anspruch 23 hat gegenüber einem separaten Verschlußglied den Vorteil, daß er nicht verloren gehen kann. Dabei empfiehlt es sich, das Gelenk durch ein sogenanntes Filmscharnier zu bilden, das den erforderlichen Bewegungen und Belastungen standzuhalten vermag.

Es dient einer einfachen und sicheren Halterung des Einsatzes, wenn dieser von einem hakenförmigen Schenkel des Klappdeckels hintergriffen wird. Dabei ist es von Vorteil, zwischen dem Schenkel und dem Mantel des Einsatzes eine Rastverbindung in Form eines zu überfahrenden Vorsprungs oder einer zu überfahrenden Ausnehmnung vorzusehen, so daß das Öffnen des Klappdeckels erst bei Anwendung einer geringen Kraftanstrengung möglich ist.

Eine Krümmung des Schenkels gemäß Anspruch 25 führt gleichzeitig zu einer seitlichen Halterung des Einsatzes, so daß es keiner anderen besonderen Maßnahme zur seitlichen Arretierung bedarf.

Die Ausgestaltung nach Anspruch 26 ermöglicht leicht und bequem die Feststellung der Himmelsrichtung, was im Hinblick auf den eingangs genannten Benutzerkreis des Gefäßes von Bedeutung ist. Wenn die Ausgestaltung nach Anspruch 26 nicht vorgesehen ist, ist es natürlich auch möglich, einen Kompass im erfindungsgemäßen Hohlraum aufzubewahren.

Nachfolgend werden zwei Ausführungsbeispiele der Erfindung anhand einer vereinfachten Zeichnung beschrieben.

Es zeigen

Fig. 1 eine erfindungsgemäß ausgestaltete Isolierkanne in einer Seitenansicht und teilweisem Schnitt;

Fig. 2 eine Draufsicht auf die Isolierkanne nach Fig. 1;

Fig. 3 einen Teilschnitt nach der Linie III-III in Fig. 1;

Fig. 4 ein Einsatzteil der Isolierkanne mit einem Verschlußglied;

Fig. 5 einen Teilschnitt nach der Linie V-V in Fig. 1;

Fig. 6 ein zweites Ausführungsbeispiel der Isolierkanne in der Seitenansicht;

Fig. 7 eine Draufsicht auf die Isolierkanne nach Anspruch 6;

Fig. 8 den Griff der Isolierkanne in einer Explosionsdarstellung.

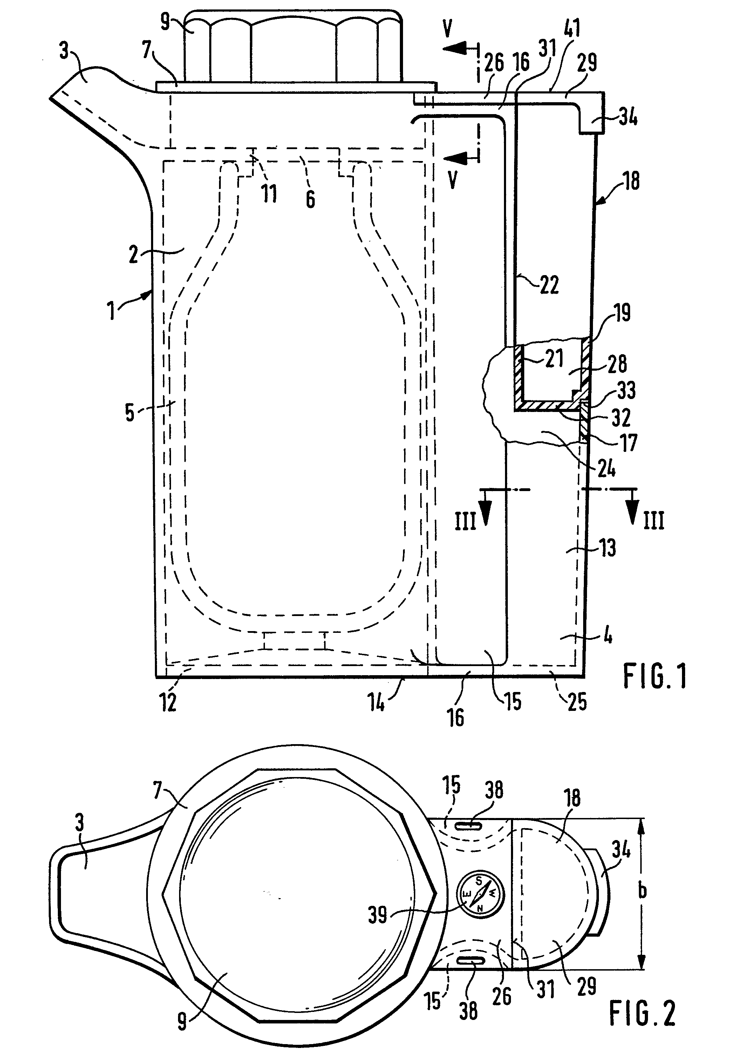

Die in Fig. 1 allgemein mit 1 bezeichnete Isolierkanne umfaßt ein Gehäuse 2 mit einstückig angeformtem Gießer 3 und Griff 4, einem im Gehäuse 2 angeordneten Isoliereinsatz 5, ein eine Füllöffnung 6 verschließbares Verschlußglied 7 in Form eines Schraubstopfens mit Gewinde und einer becherförmigen Kappe 9, die in einer oberseitigen Ausnehmung des Verschlußgliedes 7 steckt. Der Isoliereinsatz 5 ist zwischen einer Schulter 11 und einem einschraubbaren Bodenteil 12 gehalten.

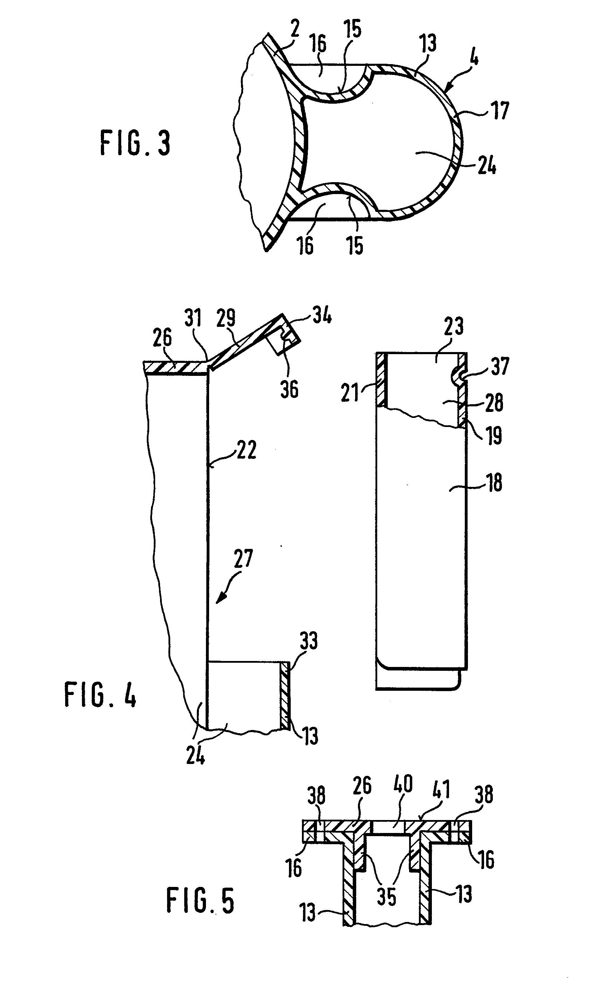

Aus Fig. 3 ist am deutlichsten zu erkennen, daß der Griff 4 durch eine U-förmige Wand 13 gebildet ist, deren freie Enden an das Gehäuse 2 einstückig anschließen. Der Griff 4 erstreckt sich senkrecht über die gesamte Höhe der Isolierkanne 1. Infolgedessen liegt die ebene Unterseite des Griffs 4 in einer Ebene mit der Standfläche 14 der Isolierkanne 1. Im Bereich der freien Enden der U-förmigen Wand 13 sind auf beiden Seiten des Griffs 4 Profileinziehungen in Form von Sicken 15 vorgesehen, die an der Unterseite und an der Oberseite des Griffs durch Rippen 16 geschlossen sind. Die Sicken 15 dienen der Griffestigkeit des Griffs 4.

Auf der dem Gehäuse 2 abgewandten Seite des Griffs 4 ist dessen Mantel 17 halbkreisförmig gerundet und in der oberen Hälfte des Griffs 4 ausgespart, was am deutlichsten aus der Fig. 4 zu entnehmen ist. In dieser Aussparung ist ein topfförmiger Einsatz 18 einsetzbar, der im horizontalen Querschnitt halbkreisförmig geformt ist und dessen gerundeter Mantel 19 der Rundung des Griffs 4 entspricht. In eingesetzter Position schließt der Einsatz 18 die Aussparung im Griff 4, so daß der Mantel 19 mit dem gerundeten Mantel 17 des Griffs 4 abgleicht und seine ebene Wand 21 an den durch die vorgenannte Aussparung gebildeten Flächen 22 der U-förmigen Wand 13 anliegt. Aufgrund der gleich breiten Bemessung wie der Griff 4 (siehe b), paßt sich der Einsatz 18 voll in den Griff 4 ein. Oberseitig weist der Einsatz 18 eine Öffnung 23 auf.

Im Griff 4 befindet sich ein erster Hohlraum 24, der bei eingesteztem Einsatz 18 allseitig umgeben ist, nämlich durch die U-förmige Wand 13, das Gehäuse 2, eine Bodenwand 25 und eine Deckwand 26. Bei entferntem Einsatz 18 ergibt sich eine Öffnung 27 für den ersten Hohlraum 24, die in Fig, 4 deutlich ersichtlich ist. Es sind im bzw. am Griff 4 zwei Hohlräume vorhanden, nämlich der erste Hohlraum 24 und der zweite Hohlraum 28 im Einsatz 18, der durch einen Klappdeckel 29 verschließbar ist, der durch ein Filmscharnier 31 an der Deckwand 26 angelenkt ist. Die Festlegung des Einsatzes 18 am Griff 4 erfolgt zum einen durch einen verjüngten bodenseitigen Ansatz 32, der etwa schließend dem mit 33 bezeichneten Rand des Griffs 4 hintergreift, und zum anderen durch den Klappdeckel 29, der mit einem hakenförmigen Schenkel 34 den gerundeten Mantel 19 des Einsatzes 18 hintergreift und den Einsatz gegen die Flächen 22 drückt. Aufgrund der gekrümmten Ausbildung des Schenkels 34 (siehe Fig. 2) ist der Einsatz 18 auch seitlich gehalten.

Es stehen somit zwei voneinander getrennte Hohlräume 24 und 28 zur Verfügung, in denen für den Benutzer interessante oder lebenswichtige Gegenstände aufbewahrt werden können, zum Beispiel Arzneimittel, Heftpflaster und andere Notartikel.

Die Ausgestaltung der Deckwand 26 ist am besten aus Fig. 5 zu entnehmen. Die Deckwand 26 weist auf ihrer Unterseite zwei Schenkel 35 auf, die schließend zwischen die freien Enden der U-förmigen Wand 13 fassen und durch eine nicht dargestellte Verrastungsvorrichtung die Deckwand 26 in der eingesetzten Position sichern.

Eine Verrastung ist auch zwischen dem Schenkel 34 des Klappdeckels 29 und dem Mantel 29 des Einsatzes 18 vorgesehen, um zu verhindern, daß der Klappdeckel 29 zu leicht öffnet. Diese Verrastungsvorrichtung besteht aus einem Ansatz 36 auf der Innenseite des Schenkels 34, der in eine Ausnehmung 37 im Mantel 19 des Einsatzes 18 einschnappt.

Die Rippen 16 an der Oberseite der Isolierkanne 1 und die Deckwand 26 werden auf jeder Seite des Griffs 4 von Langlöchern 38 durchfaßt, die es ermöglichen, die Isolierkanne 1 mittels Riemen oder dergleichen zu befestigen, beispielsweise an einem Rucksack. Die Langlöcher 38 sind in Fig. 2 dargestellt.

An der Oberseite des Griffs 4 ist ein ebenfalls in Fig. 2 dargestellter Kompass 39 angeordnet, mit dem der Benutzer leicht und bequem die Himmelsrichtungen feststellen kann. Der Kompass 39 ist in einem Loch 4o eingesetzt und in nicht dargestellter Weise befestigt, so daß seine Oberseite mit der Oberseite 41 des Griffs 4 abgleicht. Das Loch 4o ist in der Fig. 5 ersichtlich.

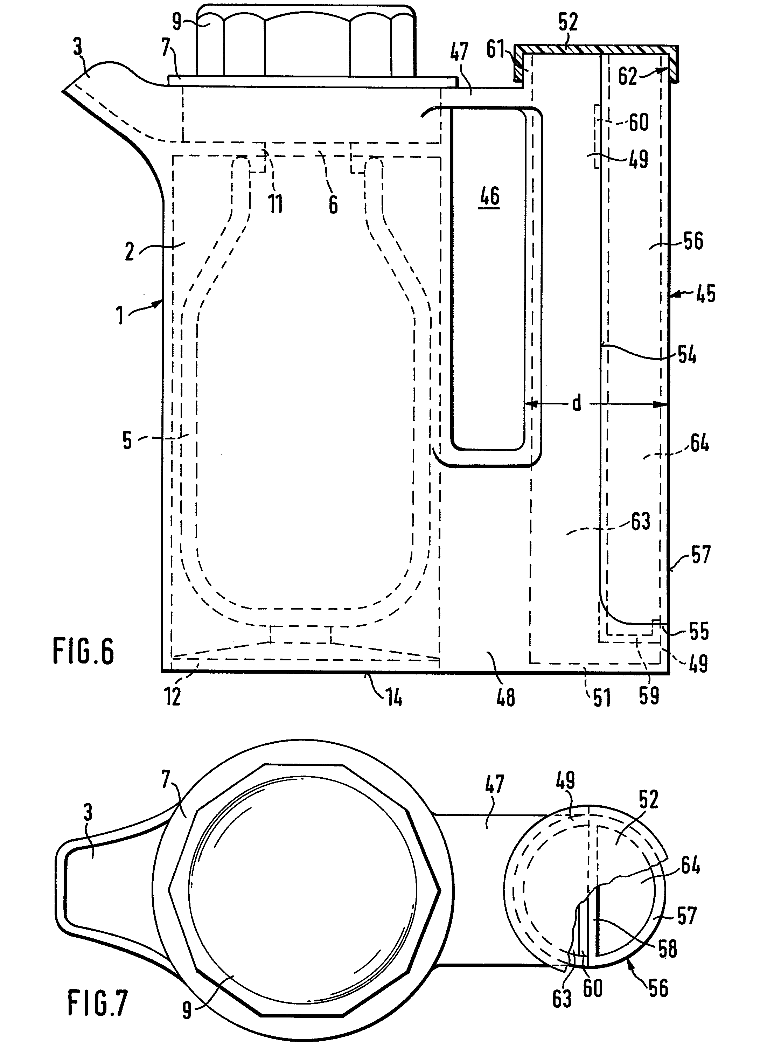

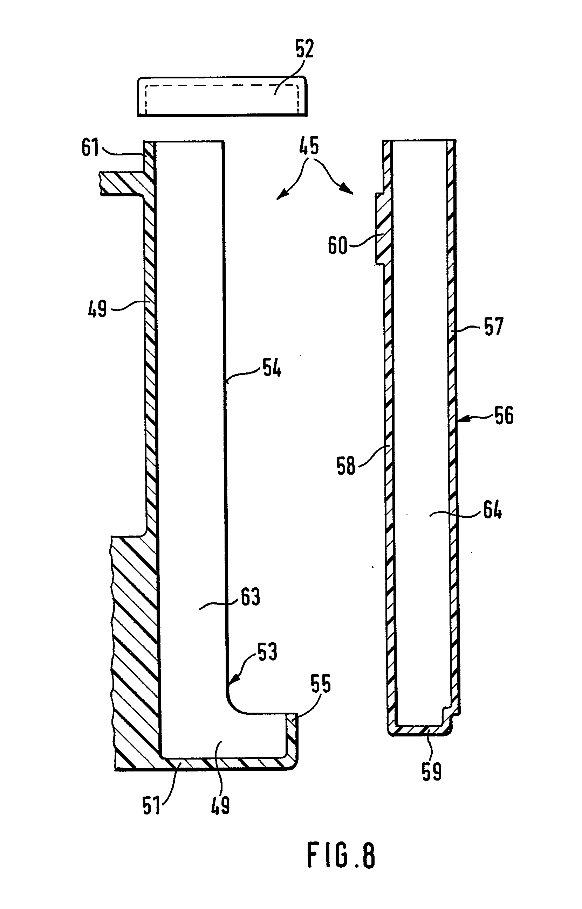

Das zweite Ausführungsbeispiel gemäß Fig. 6 bis 8 ist ebenfalls an einer Isolierkanne ausgeführt, deren grundsätzlicher Aufbau dem Aufbau der in Fig. 1 beschriebenen Isolierkanne gleicht. Deshalb wird mit Ausnahme der Positionszahl 4 für den Griff auf die Positionszahlen 1 bis 12 aus dem ersten Ausführungsbeispiel Bezug genommen.

Beim zweiten Ausführungsbeispiel ist der Griff der Isolierkanne 1 mit 45 bezeichnet. Im Unterschied zum ersten Ausführungsbeispiel besteht hier eine Durchgifföffnung 46 zwischen dem Griff 45 und dem Gehäuse 2. Oberhalb und unterhalb der Durchgifföffnung 46 ist der Griff 45 durch Stege 47,48 mit dem Gehäuse 2 verbunden. Der Griff 45 selbst ist durch einen sich senkrecht erstreckenden zylindrischen Mantel 49 gebildet, der unten durch eine Bodenwand 51 verschlossen ist, die wie schon beim ersten Ausführungsbeispiel eben ist und in einer Ebene mit der Standfläche 14 der Isolierkanne 1 liegt. Oberseitig ist der Griff 45 offen und durch einen hutförmigen losen Deckel 52 verschließbar.

Auf seiner dem Gehäuse 2 abgewandten Seite ist der Mantel 49 des Griffs 45 bis auf seine Mitte senkrecht ausgespart, wobei im Bereich der Bodenwand 51 ein Stück des Mantels 49 verbleibt. Durch die Aussparung 53 werden senkrechte Flächen 54 und ein horizontaler Rand 55 am Mantel 49 des Griffs 45 gebildet. In diese Aussparung 53 ist ein Einsatz 56 einsetzbar, dessen Bauart mit dem Einsatz 18 aus dem ersten Ausführungsbeispiel vergleichbar ist. Der Einsatz 56 ist im horizontalen Querschnitt ebenfalls halbkreisförmig geformt, wobei die Rundung seines gerundeten Mantels 57 der Rundung des zylinderförmigen Mantels 49 des Griffs 45 entspricht. Infolgedessen entspricht auch die Breite der ebenen Wand 58 dem Durchmesser d des Mantels 49. Der Einsatz 56 weist auch unterseitig einen verjüngten Vorsprung 59 auf, der in eingesetzter Position den Rand 55 des Griffs 45 hintergreift. In dieser eingesetzten Position liegt die ebene Wand 58 des Einsatzes 56 an den Flächen 54 des Griffs 45 an. Außenseitig auf der ebenen Wand 58 ist ein Zentrieransatz 6o vorgesehen, der mit etwa radial zur Isolierkanne 1 verlaufenden Zentrierflächen zwischen die Innenseiten des Griffs 45 faßt. Zur endgültigen Festlegung des Einsatzes 56 ist der Deckel 52 vorgesehen, der in der eingesetzten Position über den oberen Rand des Einsatzes 56 und einen oberseitigen, aufwärts gerichteten Rand 61 des Griffs 45 gestülpt wird. Der Rand 61 und der Mantel 57 des Einsatzes 56 ergänzen sich zu einem zylindrischen Ring, dessen Umfang mit der Innenwand 62 des Deckels 52 übereinstimmt, so daß der Deckel 52 schließend aufsitzt.

Wie schon beim ersten Ausführungsbeispiel sind auch beim zweiten Ausführungsbeispiel ein erster Hohlraum 63 und ein zweiter Hohlraum 64 im Einsatz 56 vorhanden, in denen der Benutzer sich die Gegenstände aufbewahren kann. Im Unterschied zum ersten Ausführungsbeispiel werden beim zweiten Ausführungsbeispiel beide Hohlräume 63,64 durch den Deckel 52 gemeinsam verschlossen.

- 1 -

ANSPRÜCHE

1. Gefäß zur vorübergehenden Aufbewahrung bzw. zur Einnahme von Speisen oder Getränken, insbesondere Isolierspeisegefäß oder Isolierkanne bzw. -flasche, mit einem Gehäuse, dessen Füllöffnung durch einen Deckel verschließbar ist, wobei das Gehäuse einen besonderen verschließbaren Hohlraum zur Aufnahme von Gegenständen bildet und das Gefäß einen Griff aufweist, dadurch gekennzeichnet, daß der Griff (4,45) hohl ausgebildet ist und der Hohlraum (24,28,63,64) im Griff (4,45) angeordnet ist.

2. Gefäß nach Anspruch 1, dadurch gekennzeichnet, daß der Griff (4,45) auf einer Seite des Gehäuses (2) angeordnet ist und einstückig vom Gehäuse (2) ausgeht.

3. Gefäß nach Anspruch 1, dadurch gekennzeichnet, daß der Griff (4,45) und bevorzugt auch das Gehäuse (2) aus Kunststoff bestehen und der Griff (4,45) bevorzugt einstückig mit dem Gehäuse (2) im Blas- oder Spritzgieß-

2   0157223

oder Spritzpreßverfahren hergestellt ist.

4. Gefäß nach Anspruch 1 bis 3,
dadurch gekennzeichnet,
daß der Griff (4,45) etwa senkrecht verläuft und der
darin befindliche Hohlraum (24,63,64) sich etwa über
die gesamte Höhe des Gehäuses (2) erstreckt.

5. Gefäß nach Anspruch 4,
dadurch gekennzeichnet,
daß die Unterseite des Griffs (4,45) wenigstens teilweise eben ist und in einer Ebene mit der Standfläche (14) des Gefäßes liegt.

6. Gefäß nach einem der Ansprüche 1 bis 5,
dadurch gekennzeichnet,
daß der Griff (4,45) sich geradlinig erstreckt.

7. Gefäß nach einem der Ansprüche 1 bis 6,
dadurch gekennzeichnet,
daß der Griff (4,45) -im horizontalen Querschnitt
gesehen- durch eine U-förmige Wand (13) gebildet ist,
deren freie Enden bevorzugt einstückig an das Gehäuse
(2) anschließen.

8. Gefäß nach Anspruch 7,
dadurch gekennzeichnet,
daß die U-förmige Wand (13) im Bereich ihrer freien
Enden im Sinne von vertikalen Sicken (15) aufeinanderzu eingezogen ist.

9. Gefäß nach einem der Ansprüche 1 bis 8,
dadurch gekennzeichnet,
daß der Hohlraum (24,28,63,64) durch einen bevorzugt
hohlen Einsatz (18,56) in wenigstens zwei Abteilunger
(24,28; 63,64) unterteilt ist.

3

0157223

1o. Gefäß nach Anspruch 9,
dadurch gekennzeichnet,
daß der hohle Einsatz (18,56) mit wenigstens einem
Teil seines Mantels (19,57) den Mantel (17,49) des
Gehäuses (2) oder des Griffs (4,45) ersetzt.

11. Gefäß nach Anspruch 9 oder 1o,
dadurch gekennzeichnet,
daß der Griff (4,45) auf seiner dem Gehäuse (2) abgewandten Seite im horizontalen Querschnitt etwa
halbrund gefomrt ist, daß der Einsatz (18,56) im
horizontalen Querschnitt etwa gleich geformt ist
und daß der Einsatz (18,56) auf der dem Gehäuse (2)
abgewandten Seite des Griffs (4,45) angeordnet ist.

12. Gefäß nach einem der Ansprüche 1 bis 11,
dadurch gekennzeichnet,
daß ein Verschlußglied (29,52) für den Hohlraum den
Einsatz (18,56) formschlüssig am Gehäuse (2) oder
am Griff (4,45) arretiert.

13. Gefäß nach einem der Ansprüche 9 bis 12,
dadurch gekennzeichnet,
daß der Einsatz (18,56) bevorzugt an seiner Unterseite mit einer Verrastung oder Zentrierung (32,59)
in den Hohlraum (24,63) oder in eine Halterung am
Griff (4,45) einfaßt und an seiner
Oberseite durch das Verschlußglied (29) übergriffen
ist, das bevorzugt am Gehäuse (2) oder am Griff (4,
45) klappbar befestigt.

14. Gefäß nach einem der Ansprüche 9 bis 13,
dadurch gekennzeichnet,
daß das Verschlußglied (52) lose ist und das obere
Ende des Einsatzes (56) und gleichzeitig einen Halterungsansatz (61) des Gehäuses (2) oder des Griffs
(4,45) übergreift.

15. Gefäß nach Anspruch 14,
dadurch gekennzeichnet,
daß der obere Rand des Einsatzes (56) und ein aufwärts gerichteter Rand (61) an der Oberseite des
Griffs (4,45) sich zu einem Ring ergänzen, über den
ein hutförmiger Deckel (52) schließend setzbar ist.

16. Gefäß nach Anspruch 13,
dadurch gekennzeichnet,
daß der Einsatz (56) auf seiner dem Griff (45) oder
dem Gehäuse (2) zugewandten Seite aufrechte und auf
das Gehäuse (2) hin gerichtete Zentrierflächen (6o)
aufweist, mit denen er zwischen Zentrierflächen (49)
am Griff (45) oder Gehäuse (2) greift oder solche
übergreift.

17. Gefäß nach einem der Ansprüche 1o bis 16,
dadurch gekennzeichnet,
daß wenigstens der den Mantel (17,49) des Gehäuses
(2) oder des Griffs (4,45) ersetzende Teil des Mantels
(19,57) des Einsatzes (18,56) aus durchsichtigem
Material besteht.

18. Gefäß nach einem der Ansprüche 1 bis 17,
dadurch gekennzeichnet,
daß das Gehäuse (2) bzw. der Griff (4,45) bevorzugt
in wenigstens einem Vorsprung (16) wenigstens ein
Loch (4o) für den Durchzug eines Riemens oder dergleichen aufweist.

19. Gefäß nach einem der Ansprüche 8 bis 18,
dadurch gekennzeichnet,
daß die Sicken (15) wenigstens oberseitig durch
horizontale Rippen (16) geschlossen sind.

2o. Gefäß nach Anspruch 18 und 19,
dadurch gekennzeichnet,

daß das Loch (4o) in den Rippen (16) angeordnet ist.

21. Gefäß nach einem der Ansprüche 9 bis 2o,
dadurch gekennzeichnet,
daß der Einsatz (18) den Hohlraum (24) oberseitig
nur teilweise abdeckt und der nicht abgedeckte Bereich des Hohlraumes (24) durch eine Deckwand (26)
abgedeckt ist.

22. Gefäß nach Anspruch 21,
dadurch gekennzeichnet,
daß die Deckwand (26) am Griff (4) verrastet ist.

23. Gefäß nach einem der Ansprüche 1 bis 22,
dadurch gekennzeichnet,
daß das Verschlußglied für den Hohlraum (24) ein
Klappdeckel (29) ist, dessen Gelenk bevorzugt durch
ein Filmscharnier (31) gebildet ist.

24. Gefäß nach Anspruch 23,
dadurch gekennzeichnet,
daß der Klappdeckel (29) den Einsatz (18) mit einem
hakenförmigen Schenkel (34) hintergreift und bevorzugt zwischen dem Schenkel (34) und dem Einsatz (18)
eine Verrastung wirksam ist.

25. Gefäß nach Anspruch 24,
dadurch gekennzeichnet,
daß -in der Draufsicht gesehen- wenigstens die Innenseite des Schenkels (34) entsprechend der Krümmung
des Einsatzes (18) gekrümmt ist.

26. Gefäß nach einem der Ansprüche 1 bis 25,
dadurch gekennzeichnet,
daß auf der Oberseite (41) des Gehäuses (2) bzw. des
Griffs (4), bevorzugt auf der Deckwand (26) ein Kompass (39) angeordnet, insbesondere eingelassen ist.

0157223

FIG.1

FIG.2

FIG.3

FIG.4

FIG.5

FIG.6

FIG.7

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 274 973 (BRYANT)<br><br>* Insgesamt *<br><br>--- | 1,2,4,<br>6 | A 47 J 41/02 |
| A | DE-A-1 906 540 (VEB RHÖNGLASWERK DERMBACH)<br>* Insgesamt *<br><br>--- | 1 | |
| D,A | DE-A-2 835 070 (ZIMMERMANN)<br><br>----- | | |

| RECHERCHIERTE SACHGEBIETE (Int. Cl.4) |
|---|
| A 47 J<br>A 47 G |

Der vorliegende Recherchenbericht wurde für alle Patentansprüche erstellt.

| Recherchenort<br>DEN HAAG | Abschlußdatum der Recherche<br>18-06-1985 | Prüfer<br>SCHARTZ J. |
|---|---|---|